# EUROPEAN PATENT APPLICATION

(11) **EP 4 592 047 A1**
(43) Date of publication of application: **30.07.2025**
(21) Application number: 24220867.6
(22) Date of filing: 18.12.2024
(51) Int. Cl.: B29B 7/04, B29B 7/24, B29B 7/26, B29B 7/28, B29B 7/86, B01F 25/312

(54) **APPARATUS AND METHOD FOR PROCESSING A MIXTURE OF INCOHERENT PLASTICS**

(30) Priority: 23.01.2024 IT 202400001161
(71) Applicant: Piovan S.P.A., 30036 Santa Maria di Sala (VE) (IT)
(72) Inventor: BELLIO, Enrico, 31050 Ponzano V.to (IT); GALLO, Paolo, 30036 Santa Maria di Sala (VE) (IT); CONCOLLATO, Manuel, 30036 Santa Maria di Sala (VE) (IT)
(74) Representative: Luppi Intellectual Property S.r.l.

(57) **Abstract**

An apparatus and a method for processing a mixture of incoherent plastics, in which the mixture is introduced into a container (2) and is here moved by a Venturi effect suction device (5) that has an inlet (6) for sucking the mixture and an outlet (7) for expelling the mixture, in which the inlet and the outlet are arranged in a mixture containment volume, to homogenize the mixture and ensure even distribution of the expelled material.

## Description

### Background of the invention

The invention relates to a method and/or an apparatus for processing a mixture of incoherent plastics, i.e. in the form of granules and/or microgranules and/or pellets and/or powder and/or flakes or the like, in particular to homogenize or maintain the homogeneity of two or more plastics with different features (for example with different colors, particle dimensions, density, hardness, etc).

The industrial use of mixtures consisting of polymer granules of different dimensions, colors, void percentages, density, hardness, etc, is known. Imperfect mixing and homogenization of the mixture can cause imperfections in the final products because of the lack of uniformity in the distribution of granules.

For example, in an extrusion and moulding process that uses a mixture with granules of two different colors (for example, colored granules and virgin granules), if the colors are not distributed homogeneously in the mass of the material in granules, final products can be obtained with different shades of color between one moulding session and the other or also within the same moulding session. The problem is amplified if the mixture also comprises additives or loads or granules of other types.

Further, if a mixture of granules is conveyed the drawback exists that, even if the mixture is homogeneous at the outset, the uniformity of distribution of the granules could decline during conveying so that the mixture that arrives at the zone of use (for example, a transforming machine) could be inhomogeneous.

For example, in the plastics moulding industry, the mixture of granules is generally produced by a dosing machine (batch, gravimetric, volumetric, etc dosing machine) that is generally positioned on the ground and not on the transforming machine or on the inlet port of the extruder. The mixture produced by the dosing machine can then be conveyed to the area of use, which entails the risk mentioned above.

### Summary of the invention

One object of this invention is to overcome one or more of the aforesaid limits and drawbacks of the prior art.

One object is to provide a method that is suitable for homogenizing mixtures and is an alternative to those of the prior art.

One object is to make an apparatus that is suitable for homogenizing mixtures or is an alternative to those of the prior art.

One object is to ensure a high degree of homogenization of a mixture of different types of incoherent plastics.

One advantage is to obtain a high degree of homogenization even with mixtures consisting of materials with a high difference in specific weight and/or hardness and/or dimensions and/or shape, for example with mixtures consisting of virgin material mixed with recycled or reground material.

One advantage is to provide a constructionally cheap and simple apparatus for processing incoherent plastics.

In one embodiment, a mixture of incoherent plastics is introduced into a container and is moved here by a Venturi effect suction device that has an inlet for sucking the mixture and an outlet for expelling the mixture, in which the inlet and the outlet are arranged in the container inside a mixture containment volume.

It is possible to provide for the incoherent plastics to be conveyed to the aforesaid container (for example by a pneumatic conveying conduit) and to be collected here and then mixed by the Venturi effect suction device, after which they are transferred to a plastics transforming machine. The container may be arranged above the transforming machine, so that transferring to the transforming machine may occur, for example, by gravity.

The conveying to feed the incoherent plastics to the container may be, in particular, pneumatic conveying.

Pneumatic conveying may be of any type, for example dense phase, or diluted phase, or semi-dense phase. Further, suction pneumatic conveying (in a vacuum) or thrust conveying (under pressure) may be chosen.

In the container, the mixture may recirculate several times through the Venturi effect suction device so as to ensure homogenization.

The outlet of the Venturi effect suction device may be shaped, in particular, so as to impose a spiral motion on the mixture (in particular a spiral motion around a vertical axis of the container).

The Venturi effect suction device is provided with feeding means for feeding a compressed gas (for example, air) for generating the Venturi suction effect. It is possible to provide for the flowrate and/or pressure of the fed compressed gas being so controlled as to modulate the mixing action of the material. The control may be set, in particular, in function of the mixture containment volume in the container and/or of the quantity of mixture processed in the container and/or of the type of processed mixture.

It is possible to provide, in particular, for the incoherent material to be processed being introduced into the container through an inlet that imposes a spiral motion on the material (in particular a spiral motion around a vertical axis of the container) so as to obtain better mixing of the material.

Mixing the container enables the mixture to be homogenized even if the latter enters the container in a significantly inhomogeneous form, so that preliminary homogenization of the material is not necessary, in particular it is not necessary for the dosing machine to feed an already homogenized mixture.

It has been found that, owing to the use of mixing of the material by suction with Venturi effect, a high degree of homogenization may be assured even in the case of a mixture in which a component is found to be much more dominant as a percentage than the others.

It has also been found that, owing to the use of mixing of the material by suction with Venturi effect, a high degree of homogenization is obtained even if the mixture contains a very high percentage (also above 50%) of reground post-consumer material.

It is possible, in particular, to detect a level of material inside the container to control the Venturi effect suction device, in particular to activate and/or stop and/or modulate the Venturi effect suction device and the mixing conducted by the device.

The mixture may be fed to the homogenization container by pneumatic conveying, in particular by generating a vacuum inside the container to suck the mixture. It is possible to provide for the compressed gas injected to generate the Venturi suction effect to exit from the container through the same expulsion outlet used by the pneumatic conveying to generate the depression that is used to suck the mixture.

Discharging the homogenized material outside the container may be controlled, in particular, by a movable (tilting) shutter arranged at a lower outlet of the container. The movable shutter may be configured, in particular, so as to adopt a closed position through the effect of a vacuum generated inside the container to suck the mixture by pneumatic conveying. In this case, the shutter may be of the passive non-controlled type and may be configured to assume automatically an open configuration in the absence of a vacuum generated inside the container.

In other embodiments, the (tilting) movable shutter may be commanded to open and close, for example by an actuator, in particular a pneumatically, or electrically driven actuator or other type of actuator.

The Venturi suction effect may be controlled on the basis of a desired ratio between an operating pressure of the compressed gas and a flowrate of the compressed gas (used as a mixing fluid), in which the aforesaid pressure/flowrate ratio may be used as a set point value.

### Brief description of the drawings

The invention can be better understood and implemented with reference to the attached drawings that illustrate an embodiment thereof by way of non-limiting example, in which:

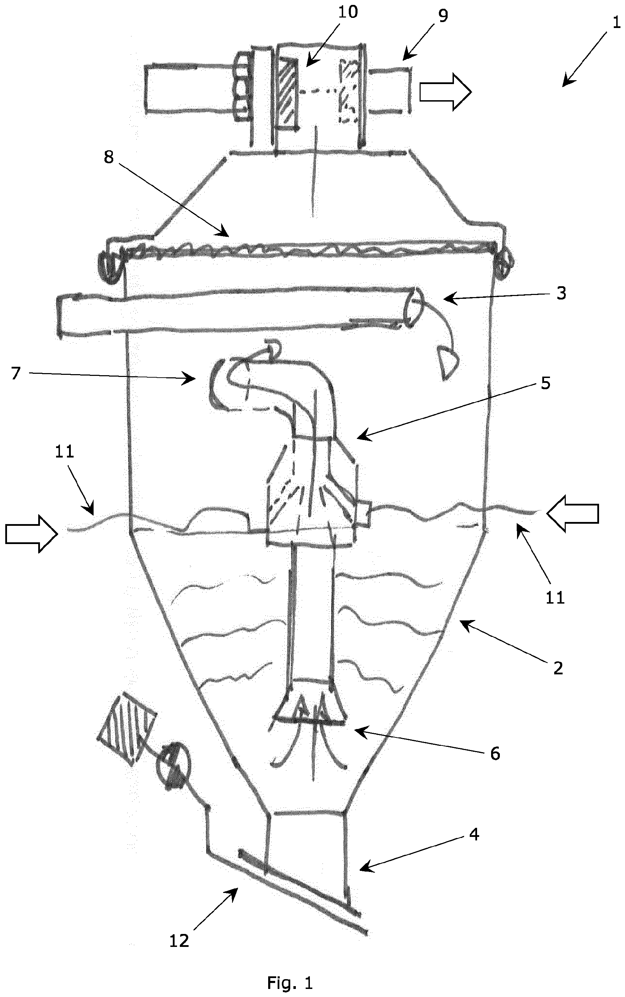

- Figure 1 is a diagram in a vertical elevation of an embodiment of a treatment apparatus, made according to the present invention, for homogenizing a mixture of incoherent plastics;

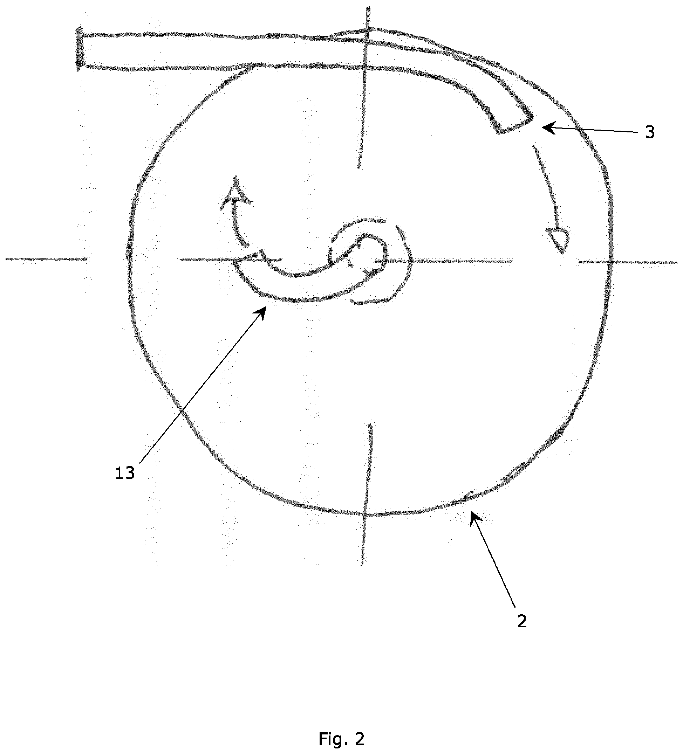

- Figure 2 is a top plan view of the apparatus of Figure 1.

### Detailed description

With reference to the aforesaid figures, 1 indicates an apparatus for processing a mixture of incoherent plastics. The apparatus 1 is used to make or keep the mixture homogeneous.

The apparatus 1 comprises at least one container 2 configured to contain the incoherent plastics inside a containing volume.

The container 2 comprises at least one mixture inlet 3 and at least one mixture outlet 4.

The apparatus 1 comprises a suction device 5 arranged in the container 2 to move the mixture in the containing volume. The suction device 5 is of the Venturi effect type.

The suction device 5 may comprise, in particular, a mixture inlet 6 and a mixture outlet 7. The mixture inlet 6 of the suction device 5 may be arranged, in particular, at a lower height than the mixture outlet 7 of the suction device 5.

The suction device 5 may be configured, in particular, so that the mixture traverses the suction device 5 (along at least one traversing conduit inside the device) with at least one vertical motion component. The suction device 5 may be so configured, in particular, that the mixture is expelled from the suction device 5 with at least one horizontal motion component. The mixture outlet 7 of the suction device 5 may be shaped so as to impose a spiral motion on the mixture (in particular a spiral motion around a vertical axis of the container 2).

The apparatus 1 may comprise, in particular, pneumatic conveying means configured to convey the mixture by a conveying flow that enters the container 2. The apparatus may comprise, in particular, a filtering means 8 that bounds (in particular above) the mixture containment volume and is traversed by the conveying flow. The filtering means 8 (for example, a solid-gas filtering wall) is configured to let the conveying gas (air) pass through and to retain the incoherent plastics that make up the mixture inside the containing volume. The conveying gas can then exit from the container through a gas outlet 9. The pneumatic conveying means may comprise, in particular, a vacuum pump (not shown) arranged downstream of the gas outlet 9.

The apparatus 1 may comprise, in particular, valve means 10 configured to open and close the gas outlet 9 and place the container 2 selectively in communication with the gas outlet 9 or with the outside environment.

The apparatus 1 may comprise, in particular, means for feeding a pressurized gas to the suction device 5 to generate Venturi effect suction. The pressurized gas is fed to the suction device 5 through at least one pressurized gas inlet 11 (for example two pressurized gas inlets 11). The means for feeding a pressurized gas may comprise, in particular, a compressor (not shown) arranged upstream of the least one pressurized gas inlet 11.

The apparatus 1 may comprise, in particular, means for expelling the gas from the container 2 through the aforesaid gas outlet 9. In particular, the apparatus 1 is so configured that the pressurized gas that is fed to the suction device 5, after passing through the suction device 5 and after generating suction by Venturi effect, can exit from the container 2, in particular, through the gas outlet 9.

The apparatus 1 for homogenizing the mixture may be operationally associated, in particular, with a transforming apparatus for transforming plastics (not shown) configured to receive in line the homogenized mixture exiting from the container 2. The transformation apparatus may comprise, in particular, an extruding machine or a moulding machine or another type of machine.

The container 2 may be arranged, in particular, above the transformation apparatus. The mixture outlet 4, arranged in a lower zone of the container 2, may be provided, in particular, with a shutter 12 that is movable and able to adopt a closed position of the mixture outlet 4 of the container 2 (to prevent the mixture escaping from the containing volume) and an open position in which the shutter 12 leaves discharge of the mixture free, in particular discharge through the effect of gravity, through the aforesaid mixture outlet 4 of the container 2.

The apparatus 1 may comprise, in particular, sensor means (not shown) configured to detect a level of incoherent material inside the container 2.

The apparatus 1 may comprise, in particular, control means (in particular electronic and programmable control means, for example a PLC or other type of electronic processor), configured to control the Venturi effect suction device 5 on the basis of signals emitted by the level sensor means.

The operation of the apparatus 1 implements a method for processing a mixture of incoherent plastics that comprises the steps of introducing the mixture in the container 2 and moving the mixture in the container 2 by the Venturi effect suction device 5 arranged in the container 2.

The moving step may comprise, in particular, sucking the mixture through the mixture inlet 6 of the suction device 5 and expelling the mixture through the mixture outlet 6 of the suction device 5, so that the material of the mixture is mixed, performing several times and inlet and outlet cycle in an interactive manner to ensure homogenization of the mixture.

A desirable number of mixtures may be determined on the basis of the values of at least one parameter in order to improve the efficiency of the mixing process. The aforesaid one or more parameters may comprise, in particular, a volume of the container 2 and/or a mixing capacity of the suction device 5. The number of mixtures may be parameterized, in particular, in function of at least two parameters, in particular the volume of the container 2 and the mixing capacity of the suction device 5. The mixing capacity of the suction device 5 may be defined empirically (for example by a classification obtained with experimental tests on different mixtures) on the basis of the composition (formula) of the mixture of the material. It is possible, in particular, to store a parameterizing function that defines the desirable number of mixtures in function of one, two or more parameters, for example in an electronic memory included in the central processing unit of the apparatus or in an external supervising system.

The mixture traverses the suction device 5 with at least one vertical motion component. The mixture inlet 6 of the suction device 5 may be arranged, in particular, in a lower zone of the suction device 5. The mixture inlet 6 of the suction device 5 may be arranged, in particular, at a vertical axis of the container 2. In this embodiment, the Venturi effect suction device 5 comprises internally a suction conduit of the mixture with a vertical portion. The zone for introducing the pressurized gas (air) into the suction conduit for generating the Venturi effect is arranged in this vertical portion. In particular, the feed compressed air is blown into a chamber inside the suction device 5 (for example a chamber arranged at a vertical central axis of the suction device 5) and flows into the vertical portion of the suction conduit for sucking the incoherent material, generating the vacuum that sucks the material, in particular from bottom to top.

The mixture may be expelled from the suction device 5 with an exit direction having at least one horizontal motion component. In particular, the mixture may be expelled from the suction device 5 so as to impose a spiral motion on the mixture, in particular a spiral motion around a vertical axis of the container 2. The suction conduit inside the suction device 5 may comprise a curved end portion 13. The curved end portion 13 has a longitudinal axis lying on a horizontal plane. The curved end portion 13 is connected to the aforesaid (rectilinear) vertical portion. The curved end portion 13 is shaped to impose the spiral exit motion on the mixture.

It is possible to provide an embodiment (not shown) in which the suction device comprises two or more outlets. In particular, the suction conduit inside the suction device may comprise two curved end portions each with a respective outlet, or a curved end portion with two outlets. Each outlet may be shaped to impose on the mixture a spiral exit motion, in particular, with the two spiral motions around the same axis that could coincide with the (vertical) axis of the container 2. The arrangement of two or more outlets may be used, in particular, when the volume of the container 2 is relatively big, for example above 50 dm³, or above 75 dm³, or above 100 dm³, in order to promote the effect of mixing the plastics mixture.

The mixture in the container 2 may be introduced by a pneumatic conveying flow that enters the container 2, traverses the filtering means 8 and then exits from the container through the gas outlet 9.

Moving or mixing the mixture in the container 2 involves feeding a pressurized gas to the suction device 5 to generate Venturi effect suction. The gas used to generate Venturi effect suction may then be expelled, in particular, through the gas outlet 9 used for pneumatic conveying feeding the material inside the container 2.

The homogenized mixture in the container 2 is then transferred to the transformation apparatus, in particular by gravity transfer, favoured by the fact that the container 2 may be arranged above the transformation apparatus.

The Venturi effect suction device 5 may be controlled (in particular by controlling the pressure and/or the flowrate of the feeding means for feeding the pressurized gas) on the basis of the level of material detected inside the container 2 by the level sensor means. It is possible, in particular, to activate the suction device 5 on the basis of the signals sent by the level sensor means. It is possible, in particular, to stop the suction device 5 on the basis of the signals sent by the level sensor means. It is possible, in particular, to adjust the suction device 5 through feedback on the basis of the signals sent by the level sensor means.

The container 2 may have, in particular, a volume above 1 dm³. The container 2 may have, in particular, a volume below 300 dm³. The container 2 may have, in particular, a volume comprised between 1 dm³ and 300 dm³. The volume of the container 2 may be determined, in particular, in function of the quantity of material to be conveyed and/or in function of the density of the incoherent plastics to be conveyed, where density can be defined as the aforesaid apparent density, i.e. considering the total volume occupied by the mass of the incoherent material (granules) i.e. the overall external dimensions thereof including the empty spaces between the particles.

The operating pressure of the suction device 5 may be, in particular, above 2 bar. The operating pressure of the suction device 5 may be, in particular, below 8 bar. The operating pressure of the suction device 5 may vary, in particular, in a range comprised between 2 bar and 8 bar.

The flowrate of the mixing fluid (compressed air) may be, in particular, above 10 Nl/min (normal litres per minute). The flowrate of the mixing fluid may be, in particular, below 50 Nl/min or below 250 Nl/min or below 700 Nl/min or below 1500 Nl/min. The flowrate of the mixing fluid may be determined, in particular, according to the volume of the container 2.

The suction device 5 may be controlled, in particular, on the basis of a determined ratio between the pressure and the flowrate of the mixing fluid, which ratio may be used as a set point value.

This pressure/flowrate ratio may be parameterized, for example in function of at least one feature of the processed plastics (in particular the chemical composition of the mixture and/or the granulometry of the material and/or the density of the material) and/or in function of at least one feature of the material conveying system (in particular the volume of the container and/or the mixing capacity of the suction device and/or the length or the width or the tortuosity of the path of the conveyed material). The parameterizing function may be stored (for example in an electronic memory included in the central processing unit of the apparatus or in an external supervising system).

## Claims

1. Method for processing a mixture of incoherent plastics, said method comprising the steps of introducing said mixture into a container (2) and moving said mixture into said container (2) by means of a Venturi effect suction device (5) arranged in said container (2).

2. Method according to claim 1, wherein said moving step comprises supplying a pressurized gas to said Venturi effect suction device (5) to generate the Venturi effect suction.

3. Method according to claim 1 or 2, wherein said moving step comprises sucking said mixture through a mixture inlet (6) of said suction device (5) and expelling said mixture through a mixture outlet (7) of said suction device (5), said mixture inlet (6) and said mixture outlet (7) being arranged in a mixture containment volume.

4. Method according to claim 3, wherein said mixture inlet (6) is arranged at a lower level than said mixture outlet (7) and/or wherein said mixture is expelled through two or more outlets of said suction device (5).

5. Method according to any one of the preceding claims, wherein said mixture passes through said suction device (5) with at least one vertical component motion component and is expelled from said suction device (5) with an exit direction having at least one horizontal component motion.

6. Method according to any one of the preceding claims, wherein said mixture exits from said suction device (5) with a spiral exit motion.

7. Method according to any one of the preceding claims, wherein said introducing step comprises pneumatic conveying of said mixture by means of a conveying flow which enters said container (2), passes through a filter medium (8) which retains said mixture and then exits from said container (2) through a gas outlet (9), said moving step comprising feeding a pressurized gas to said suction device (5) to generate Venturi effect suction, said fed gas being expelled through said gas outlet (9).

8. Method according to any one of the preceding claims, comprising the step of transferring said mixture from said container (2) to a transformation apparatus configured for the transformation of plastics; there being provided, in particular, that said container (2) is arranged above said transformation apparatus and/or that said step of transferring said mixture into said transformation apparatus occurs by gravity.

9. Method according to any one of the preceding claims, wherein said method comprises the step of detecting a level of material inside said container (2) and controlling said Venturi effect suction device (5) based on said detection, and/or wherein said method comprises the step of controlling said suction device (5) based on a ratio between a pressure and a flow rate of a mixing fluid.

10. Apparatus for processing a mixture of incoherent plastics, said apparatus comprising a container (2) with a mixture inlet (3) and a mixture outlet (4), and a Venturi effect suction device (5) arranged in said container (2) to move the mixture into said container (2).

11. Apparatus according to claim 10, comprising means for supplying a pressurized gas to said Venturi effect suction device (5) to generate the Venturi effect suction.

12. Apparatus according to claim 10 or 11, wherein:
- said suction device (5) includes a mixture inlet (6) and a mixture outlet (7), said mixture inlet (6) being at a lower level than said mixture outlet (7); and/or
- said suction device (5) is so configured that the mixture passes through said suction device (5) with at least one vertical motion component and is expelled from said suction device (5) with at least one horizontal motion component.

13. Apparatus according to any one of claims 10 to 12, comprising pneumatic conveying means configured to convey the mixture by a conveying flow which enters said container (2), passes through a filter medium (8) which retains said mixture and then exits from said container (2) through a gas outlet (9), said apparatus (1) comprising means for feeding a pressurized gas to said suction device (5) to generate the Venturi effect and means for expelling said gas from said container (2) through said gas outlet (9).

14. Apparatus according to any one of claims 10 to 13, comprising an apparatus for the transformation of plastics configured to receive in line the mixture exiting from said container (2); said container (2) being arranged above said transformation apparatus and/or said container comprising a movable shutter (12) capable of assuming a closure position of said mixture outlet (4) of said container (2) and an open position in which it allows the mixture to be discharged by gravity through said mixture outlet (4).

15. Apparatus according to any one of claims 10 to 14, comprising sensor means for detecting a level of material within said container (2) and control means configured to control said Venturi effect suction device (5) based on signals emitted by said sensor means.
